# EUROPEAN PATENT APPLICATION

(11) **EP 4 604 268 A1**
(43) Date of publication of application: **20.08.2025**
(21) Application number: 23914172.4
(22) Date of filing: 12.04.2023
(51) Int. Cl.: H01M 10/613, H01M 10/615, H01M 10/6556, H01M 10/657, H01M 10/6568, H01M 10/6554

(54) **BATTERY AND ELECTRIC DEVICE**

(30) Priority: 06.01.2023 CN 202320031543 U
(71) Applicant: Contemporary Amperex Technology (Hong Kong) Limited, Hong Kong (HK)
(72) Inventor: SONG, Feiting, Ningde, Fujian 352100 (CN); HOU, Yuepan, Ningde, Fujian 352100 (CN); ZHOU, Cong, Ningde, Fujian 352100 (CN); HUANG, Xiaoteng, Ningde, Fujian 352100 (CN); LI, Xingxing, Ningde, Fujian 352100 (CN)
(74) Representative: Ran, Handong
(86) International application number: PCT/CN2023/087898
(87) International publication number: WO 2024/146020

(57) **Abstract**

The embodiments of the present application relate to the technical field of batteries. Provided are a battery and an electric device. The battery comprises a battery cell and a thermal management component, wherein the battery cell comprises a first surface and a second surface, and the thermal management component comprises a first thermal management component and a second thermal management component. The first thermal management component is arranged on the first surface, and the first thermal management component is configured to adjust the temperature of the battery cell. The second thermal management component is arranged on the second surface, and the second thermal management component is configured to adjust the temperature of the battery cell. The first thermal management component and the second thermal management component jointly adjust the temperature of the battery cell, such that the temperature adjustment efficiency of the battery cell is improved

## Description

### CROSS-REFERENCE TO RELATED APPLICATION

The present disclosure claims the priority to the Chinese patent application with the filling No. 2023200315434 filed on January 6, 2023, and entitled "BATTERY AND ELECTRICAL DEVICE", the contents of which are incorporated herein by reference in entirety.

### TECHNICAL FIELD

The present disclosure relates to the technical field of batteries, and particularly to a battery and an electrical device.

### BACKGROUND ART

With the development of new energy technologies, batteries are widely used in electrical devices. For example, they are used in mobile phones, laptops, electric bicycles, electric cars, electric airplanes, electric ships, electric toy cars, electric toy ships, electric toy airplanes, and electric tools.

When the battery is operating, the temperature needs to be maintained within an appropriate temperature range. A typical battery usually provides a thermal management component, which is configured to adjust the temperature of the battery. However, the thermal management component is inefficient in adjusting the battery temperature, which in turn reduces the operational efficiency of the battery. Therefore, improving the operational efficiency of the thermal management component of the battery is a technical problem that needs to be urgently addressed.

### SUMMARY

The objective of the present disclosure is to provide a battery and an electrical device, wherein the thermal management component of the battery has the advantage of high operational efficiency.

On the one hand, an embodiment of the present disclosure provides a battery, which includes a battery cell and a thermal management component. The battery cell includes a first surface and a second surface, and the thermal management component includes a first thermal management component and a second thermal management component. The first thermal management component is arranged on the first surface, and the first thermal management component is configured to adjust the temperature of the battery cell. The second thermal management component is arranged on the second surface, and the second thermal management component is configured to adjust the temperature of the battery cell.

In the above solution, the first thermal management component and the second thermal management component jointly adjust the temperature of the battery cell, thus improving the temperature adjustment efficiency of the battery cell. Additionally, the first thermal management component and the second thermal management component are arranged on different surfaces of the battery cell, thereby increasing the contact area between the thermal management component and the battery cell. Therefore, the temperature adjustment efficiency of the battery cell is enhanced.

In some embodiments, the first surface and the second surface are two adjacent surfaces of the battery cell.

In the above solution, when the first surface and the second surface are adjacent, the contact positions between the first thermal management component, the second thermal management component, and the battery cell are more concentrated, thereby reducing the time required to adjust the temperature of the battery cell, and thus further improving the temperature adjustment efficiency of the battery cell.

In some embodiments, the first thermal management component is configured to heat or cool the battery cell; and/or the second thermal management component is configured to heat the battery cell.

In the above solution, when both the first thermal management component and the second thermal management component can be configured to heat the battery cell, the efficiency of heating the battery cell is improved. When the first thermal management component is configured to cool the battery cell, the second thermal management component can be configured to heat the battery cell, thus enabling the battery system to perform corresponding temperature adjustments on the battery cell through different thermal management components when the battery cell is subjected to different ambient temperatures. This allows a wider range of temperatures to be adjusted overall. Moreover, by selectively operating a certain thermal management component, the temperature of battery cells in different regions of the battery can be adjusted. This makes the overall temperature of the battery more uniform and improves the temperature adjustment efficiency of the battery cell.

In some embodiments, the first thermal management component includes a first accommodating cavity, and the first accommodating cavity is configured to accommodate a heat exchange fluid.

In the above solution, the first thermal management component, which accommodates the heat exchange fluid, can enable heat to be uniformly distributed through the flow of fluid in the first accommodating cavity, thereby reducing the probability of heat concentration in local regions and also increasing heat transfer efficiency. This improves the heat exchange effect of the first thermal management component.

In some embodiments, the second thermal management component is an electric heating component.

In the above solution, the second thermal management component is an electric heating component. On the one hand, the electric heating component has the advantage of rapid temperature increase, which enhances the temperature adjustment efficiency of the battery cell. On the other hand, the electric heating component is powered through a conducting wire, and the conducting wire is easy to arrange, thereby facilitating the mounting and arrangement of the second thermal management component. In some embodiments, the first thermal management component includes an accommodating cavity that houses a heat exchange fluid, the second thermal management component is an electric heating component, and the first thermal management component and the second thermal management component adopt different forms of thermal management arrangements. This can reduce the risk of simultaneous failure of both components leading to uncontrolled thermal management within the battery, thereby improving the overall thermal management reliability of the battery.

In some embodiments, the battery also includes a first buffering component, and at least a portion of the first buffering component is arranged between the battery cell and the second thermal management component.

In the above solution, the first buffering component can buffer the pressure exerted by the battery cell on the second thermal management component when the battery cell expands, thereby reducing the risk of damage to the second thermal management component due to pressure and enhancing the safety of the battery.

In some embodiments, the first buffering component and the second thermal management component are arranged in a stacked manner.

In the above solution, the stacked arrangement of the first buffering component and the second thermal management component allows only one surface wall of the second thermal management component being shielded by the first buffering component. This ensures the buffering effect of the first buffering component, and at the same time, a portion of the second thermal management component that is not shielded by the first buffering component can be further configured for heating other battery cells, thereby improving the utilization rate of the second thermal management component.

In some embodiments, a first housing cavity is formed inside the first buffering component, and the second thermal management component is housed within the first housing cavity.

In the above solution, by housing the second thermal management component within the first housing cavity, on the one hand, the risk of disengaging the second thermal management component and the first buffering component is reduced. On the other hand, since the battery cell is directly against the second thermal management component, the second thermal management component is pressurized and damaged when the battery cell expands; however, this risk is reduced.

In some embodiments, the battery cell includes two opposing first surfaces, and the two first surfaces are provided with the first thermal management component.

In the above solution, by arranging the first thermal management component on both opposing first surfaces of the battery cell, the contact area between the first thermal management component and the battery cell is increased, thereby improving the efficiency of the first thermal management component in adjusting the temperature of the battery cell, and also enhancing the uniformity when regulating the temperature of the battery cell.

In some embodiments, the battery cell includes two opposing second surfaces, and the two second surfaces are provided with the second thermal management component.

In the above solution, by arranging the second thermal management component on both opposing second surfaces of the battery cell, the contact area between the second thermal management component and the battery cell is increased, thereby improving the efficiency of the second thermal management component in adjusting the temperature of the battery cell, and also enhancing the uniformity when regulating the temperature of the battery cell.

In some embodiments, the first surface or the second surface is the largest surface of the battery cell.

In the above solution, by arranging the first thermal management component or the second thermal management component on the largest surface of the battery cell, the contact area between the first thermal management component or second thermal management component and the battery cell is maximized, thus improving the efficiency of temperature regulation for the battery cell.

In some embodiments, the battery further includes a box with an opening, wherein the box is configured to accommodate the battery cell. The box includes a bottom wall opposite the opening, and a first thermal management component or a second thermal management component is arranged between the battery cell and the bottom wall.

In the above solution, by arranging the first thermal management component or the second thermal management component between the battery cell and the bottom wall, the surface of the battery cell shielded by the bottom wall can also be temperature-regulated by the first thermal management component or the second thermal management component. This further increases the contact area between the thermal management component and the battery cell, thereby improving the efficiency of the thermal management component in regulating the temperature of the battery cell.

In some embodiments, the battery cell further includes a third surface, and the thermal management component further includes a third thermal management component. The third thermal management component is arranged on the third surface, and the third thermal management component is configured to adjust the temperature of the battery cell.

In the above solution, by arranging the third thermal management component, the contact area between the thermal management component and the battery cell is further increased, thus improving the efficiency of the thermal management component in adjusting the temperature of the battery cell.

In some embodiments, the first surface, the second surface, and the third surface are adjacent to each other in pairs.

In the above solution, when the first surface, the second surface, and the third surface are adjacent to each other in pairs, the contact surfaces between the thermal management component and the battery cell are more concentrated, thereby improving the efficiency of temperature adjustment for the battery cell.

In some embodiments, the battery further includes a box with an opening, where the box is configured to accommodate the battery cell. The box includes a bottom wall opposite the opening, and a third thermal management component is arranged between the battery cell and the bottom wall.

In the above solution, by arranging the third thermal management component between the battery cell and the bottom wall, the surface of the battery cell shielded by the bottom wall can also be temperature-regulated by the third thermal management component, thus improving the uniformity of temperature adjustment for the battery cell.

In some embodiments, the third thermal management component is an electric heating component.

In the above solution, the third thermal management component is an electric heating component. On the one hand, the electric heating component has the advantage of rapid temperature increase, which enhances the temperature adjustment efficiency of the battery cell. On the other hand, the electric heating component is powered through a conducting wire, and the conducting wire is easy to arrange, thereby facilitating the mounting and arrangement of the third thermal management component. Additionally, in embodiments where the second thermal management component is also an electric heating component, the third thermal management component works in conjunction with the second thermal management component, thus further enhancing the efficiency of temperature adjustment for the battery cell.

In some embodiments, the battery also includes a second buffering component, and at least a portion of the second buffering component is arranged between the battery cell and the third thermal management component.

In the above solution, the second buffering component can buffer the pressure exerted by the battery cell on the third thermal management component when the battery cell expands, thereby reducing the risk of damage to the third thermal management component due to pressure and enhancing the safety of the battery.

In some embodiments, the second buffering component and the third thermal management component are arranged in a stacked manner.

In the above solution, compared to when the second buffering component is not provided and the battery cell directly compresses the third thermal management component, the second buffering component and the third thermal management component are arranged in a stacked manner. When the battery cell expands in the direction where the third thermal management component is arranged, it can preferentially compress the second buffering component, to reduce the probability of failure or damage to the third thermal management component due to compression. Or, when the third thermal management component is therein arranged with a flow channel for containing heat exchange fluid, the likelihood of the third thermal management component being compressed due to the compression of the flow channel, which further results in poor heat exchange performance, can be reduced.

In some embodiments, a second housing cavity is formed inside the second buffering component, and the third thermal management component is housed within the second housing cavity.

In the above solution, by housing the third thermal management component within the second housing cavity, on the one hand, the risk of disengaging the third thermal management component and the second buffering component is reduced. On the other hand, since the battery cell is directly against the third thermal management component, the third thermal management component is pressurized and damaged when the battery cell expands; however, this risk is reduced.

In some embodiments, the battery cell includes two opposing third surfaces, and the two third surfaces are provided with the third thermal management component.

In the above solution, by arranging the third thermal management component on both opposing third surfaces of the battery cell, the contact area between the third thermal management component and the battery cell is increased, thereby improving the efficiency of the third thermal management component in adjusting the temperature of the battery cell, and also enhancing the uniformity when regulating the temperature of the battery cell.

In some embodiments, the third surface is the largest surface of the battery cell.

In the above solution, when the third surface is the largest surface, the contact area between the third thermal management component and the battery cell is maximized, thus improving the efficiency of the third thermal management component in adjusting the temperature of the battery cell.

In some embodiments, the battery includes multiple rows of battery cells, and the thermal management component includes multiple first thermal management components, wherein the multiple first thermal management components are arranged along a first direction. A row of battery cells is arranged between two adjacent first thermal management components along the first direction.

In the above solution, since multiple first thermal management components are arranged in the first direction, each row of battery cells can be housed between two adjacent first thermal management components, thus allowing multiple battery cells to share one first thermal management component. This reduces the number of first thermal management components required for the battery and saves on the manufacturing cost of the battery.

In some embodiments, in each row of battery cells, a second thermal management component is arranged on both sides of each battery cell along a second direction, and a second thermal management component is arranged between two adjacent battery cells. The first direction is perpendicular to the second direction.

In the above solution, by arranging the second thermal management components on both sides of each battery cell in each row of battery cells along the second direction, it ensures that the temperature of each battery cell in each row of battery cells can be regulated by the corresponding second thermal management component. A second thermal management component is arranged between two adjacent battery cells for heating, thus allowing the two battery cells to share one second thermal management component. This reduces the number of second thermal management components required and lowers the manufacturing cost of the battery.

In some embodiments, the thermal management component further includes a third thermal management component. The third thermal management component is arranged along the third direction on at least one side of the battery cell, and the third thermal management component is configured to regulate the temperature of the battery cell. The first direction, the second direction, and the third direction are mutually perpendicular.

In the above solution, by arranging the third thermal management component on at least one side of the battery cell, it ensures that the temperature of each battery cell in each row of battery cells can be regulated by the corresponding third thermal management component.

In some embodiments, the battery includes at least one first battery cell, at least one second battery cell, a first control module, and a second control module. The thermal management component arranged on the first battery cell is independently controlled by the first control module, and the thermal management component arranged on the second battery cell is independently controlled by the second control module.

In the above solution, the first control module independently controls the thermal management component of the first battery cell, and the second control module independently controls the thermal management component of the second battery cell, thus enabling independent temperature regulation for the first battery cell and the second battery cell. Furthermore, different adjustments can be made based on the different environmental temperatures surrounding the first battery cell and the second battery cell, or according to the temperature regulation requirements of each battery cell, thereby improving the rationality of the overall thermal management adjustment of the battery.

In some embodiments, the battery includes at least one first battery pack, at least one second battery pack, a third control module, and a fourth control module. The first battery pack includes at least one battery cell, and the second battery pack includes at least one battery cell. The thermal management components arranged on the battery cells of the first battery pack are independently controlled by the third control module, and the thermal management components arranged on the battery cells of the second battery pack are independently controlled by the fourth control module.

In the above solution, the third control module independently controls the first battery pack, and the fourth control module independently controls the second battery pack, thus allowing the third control module and the fourth control module to regulate the temperature of the first battery pack and the second battery pack separately. Furthermore, different adjustments can be made based on the different environmental temperatures or the temperature regulation requirements of the first battery pack and the second battery pack, thereby improving the rationality of the overall thermal management adjustment.

In some embodiments, each row of battery cells includes multiple battery cells, and a third thermal management component is arranged to correspond to one row of battery cells, with each third thermal management component being configured to regulate the temperature of one row of battery cells.

In the above solution, each third thermal management component is configured to regulate the temperature of a row of battery cells, which reduces the number of third thermal management components required by the battery and lowers the manufacturing cost of the battery.

In some embodiments, along the third direction, one side of the battery cell is provided with an electrode terminal, and the side of the battery cell away from the electrode terminal is provided with the third thermal management component.

In the above solution, by arranging the third thermal management component on the side of the battery cell away from the electrode terminal, the third thermal management component can both regulate the temperature of the battery cell and reduce the risk of a third thermal management component forming an interference with the electrode terminal.

On the other hand, the present disclosure also provides an electrical device that includes the battery from the embodiments described above.

The above description is only an overview of the technical solution of the present disclosure. To provide a clearer understanding of the technical solutions of the present disclosure, it can be implemented according to the content of the summary. In order to make the above and other objectives, features, and advantages of the present disclosure more apparent and understandable, specific embodiments of the present disclosure are provided below.

### BRIEF DESCRIPTION OF DRAWINGS

Through reading the detailed description of the preferred embodiments below, various other advantages and benefits will become apparent to those skilled in the art. The drawings are provided solely for illustrating the preferred embodiments and are not to be considered as a limitation of the present disclosure. Moreover, in all the drawings, the same reference numerals are used to denote the same components. In the drawings,
FIG. 1 is a schematic diagram of a structure of a vehicle provided in some embodiments of the present disclosure;
FIG. 2 is a structural schematic diagram of a battery provided in some embodiments of the present disclosure;
FIG. 3 is a schematic diagram of a structure of a battery cell provided in some embodiments of the present disclosure;
FIG. 4 is a schematic diagram of a structure of a first thermal management component provided in some embodiments of the present disclosure;
FIG. 5 is a schematic diagram of a structure of a second thermal management component provided in some embodiments of the present disclosure;
FIG. 6 is a schematic diagram of a cooperation between a first buffering component and a battery cell according to some embodiments of the present disclosure (with a second thermal management component sandwiched between two first buffering components, between two battery cells);
FIG. 7 is a schematic diagram of a cooperation between a first buffering component and a battery cell according to other embodiments of the present disclosure (with a second thermal management component housed within a first housing cavity of a first buffering component);
FIG. 8 is a schematic diagram of a cooperation between a first buffering component and a second thermal management component according to some embodiments of the present disclosure (with a first housing cavity of a first buffering component being a sealed chamber);
FIG. 9 is a schematic diagram of a cooperation between a first buffering component and a second thermal management component according to other embodiments of the present disclosure (with a first housing cavity of a first buffering component provided with an opening);
FIG. 10 is a schematic diagram of a structure of a third thermal management component provided in some embodiments of the present disclosure;
FIG. 11 is a schematic diagram of a cooperation between a second buffering component and a battery cell according to some embodiments of the present disclosure (with a third thermal management component and a second buffering component being arranged in a stacked manner);
FIG. 12 is a schematic diagram of a cooperation between a second buffering component and a battery cell according to some embodiments of the present disclosure (with a third thermal management component housed in a second housing cavity of a second buffering component, where a first housing cavity is a sealed chamber);
FIG. 13 is a schematic diagram of a cooperation between a second buffering component and a third thermal management component according to some embodiments of the present disclosure (with a second housing cavity of a second buffering component provided with an opening);
FIG. 14 is a schematic diagram of a cooperation between a third thermal management component and a battery cell according to some embodiments of the present disclosure (with both third surfaces of the battery cell being provided with third thermal management components);
FIG. 15 is a schematic diagram of a cooperation between a first buffering component and a battery cell according to further embodiments of the present disclosure (with one first buffering component and one second thermal management component arranged between two battery cells);
FIG. 16 is a structural schematic diagram of a battery (showing a first battery pack and a second battery pack) according to some embodiments of the present disclosure; and
FIG. 17 is a schematic diagram of a cooperation between a third thermal management component and a battery cell according to some embodiments of the present disclosure (with a third thermal management component arranged on a side of a battery cell that faces away from an electrode terminal along a third direction).

The drawings in the specific embodiments are labeled as follows:
10 - box; 11 - first part; 12 - second part; 20 - battery cell; 21 - first battery pack; 22 - second battery pack; 201 - first surface; 202 - second surface; 203 - third surface; 204 - electrode terminal; 30 - first thermal management component; 31 - plate body; 32 - first current collector; 321 - medium inlet; 33 - second current collector; 331 - medium outlet; 40 - third thermal management component; 41 - second heating body; 42 - second connecting portion; 50 - second thermal management component; 51 - first heating body; 52 - first connecting portion; 60 - first buffering component; 70 - second buffering component; 80 - fourth thermal management component; 90 - thermal management component; 100 - battery; 200 - controller; 300 - motor; 1000 - vehicle.

### DETAILED DESCRIPTION OF EMBODIMENTS

The following will provide a detailed description of the embodiments of the technical solution of the present disclosure, in conjunction with the accompanying drawings. The following examples are provided solely for a clearer illustration of the technical solutions in the present disclosure. They are presented as examples and should not be used to limit the scope of protection of the present disclosure.

Unless otherwise defined, all technical and scientific terms used herein have the same meaning as understood by those skilled in the art of the technical field of the present disclosure. The terms used herein are used for the purpose of describing specific embodiments and are not intended to limit the present disclosure. The terms "comprise", "include", and any variations thereof as used in the description, claims, and the above-mentioned drawing descriptions of the present disclosure are intended to cover non-exclusive inclusions.

In the description of the embodiments of the present disclosure, the technical terms "first", "second", etc. are used solely for the purpose of distinguishing different objects and should not be construed as indicating or implying relative importance or suggesting a specific quantity, specific order, or hierarchical relationship of the indicated technical features. In the description of the embodiments of the present disclosure, "multiple" means at least two, such as two and three, unless otherwise expressly and specifically limited.

The term "embodiment" used herein means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

In the description of the embodiments of the present disclosure, the term "multiple" refers to two or more.

Additionally, in the description of the embodiments of the present disclosure, technical terms indicating orientations or positional relationships, such as "thickness", "up", and "down" are based on the orientations or positional relationships shown in the drawings. These terms are used for facilitating the description of the embodiments of the present disclosure and simplifying the description, and should not be construed as indicating or implying that the devices or components referred to must have specific orientations or be constructed and operated in specific orientations. Therefore, they should not be understood as limiting the embodiments of the present disclosure.

In the description of the embodiments of the present disclosure, unless otherwise expressly specified and limited, technical terms such as "provide", "connect", "communicate", "fix", and similar terms should be broadly interpreted. For example, they can be fixed connections, detachable connections, or integral connections. They can also be mechanical connections or electrical connections. They can also be direct connections or indirect connections through intermediate media. Furthermore, they can be internal connections within two components or the interaction between two components. Those of ordinary skill in the art can understand the meanings of the above terms in the embodiments of the present disclosure according to specific situations.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, and the overall dimensions such as thickness, length, and width of the integrated device, are provided as illustrative examples and should not be construed to limit the scope of the present disclosure.

A battery typically includes one or more battery cells, and the battery cell is an energy storage unit within the battery. Electrical energy is charged into the battery cell and released outward from the battery cell. During operation, the working temperature of a battery cell must be maintained within an appropriate temperature range. If the temperature is too low, the charge and discharge performance of the battery cell decreases, thus reducing the operational efficiency of the battery. If the temperature is too high, it increases the risk of thermal runaway in the battery cell, thus reducing the safety of the battery. Therefore, temperature regulation for the battery mainly focuses on regulating the temperature of the battery cell.

Commonly, the temperature of the battery cell is regulated through a thermal management component, and the thermal management component can be a water-cooling plate. The water-cooling plate is a plate body with a space formed inside to hold a medium, and the water-cooling plate is applied to the battery cell so that the temperature of the battery cell is managed by the water-cooling plate. If the temperature of the battery cell is too high, the water-cooling plate cools the battery cell; and if the temperature of the battery cell is too low, the water-cooling plate heats the battery cell.

The inventors noted that in common batteries, the battery cell is typically in contact with the water-cooling plate on only one side, which limits the contact area between the water-cooling plate and the battery cell. This makes it difficult for the water-cooling plate to adjust the temperature of the battery cell in a timely manner when the temperature of the battery cell is too low or too high.

To address the above issue in the prior art, the inventors conducted in-depth research and designed a battery. The battery cell of the battery includes a first surface and a second surface, and the thermal management component includes a first thermal management component and a second thermal management component. The first thermal management component is arranged on the first surface, and the first thermal management component is configured to adjust the temperature of the battery cell. The second thermal management component is arranged on the second surface, and the second thermal management component is configured to adjust the temperature of the battery cell.

On the one hand, the first thermal management component and the second thermal management component jointly adjust the temperature of the battery cell, thus improving the temperature adjustment efficiency of the battery cell. On the other hand, the first thermal management component and the second thermal management component are arranged on different surfaces of the battery cell, thereby increasing the contact area between the thermal management component and the battery cell. Therefore, the temperature adjustment efficiency of the battery cell is enhanced.

The embodiments of the present disclosure provide an electrical device that uses batteries as a power source. The electrical device can comprise, but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electrical device is a vehicle as an example.

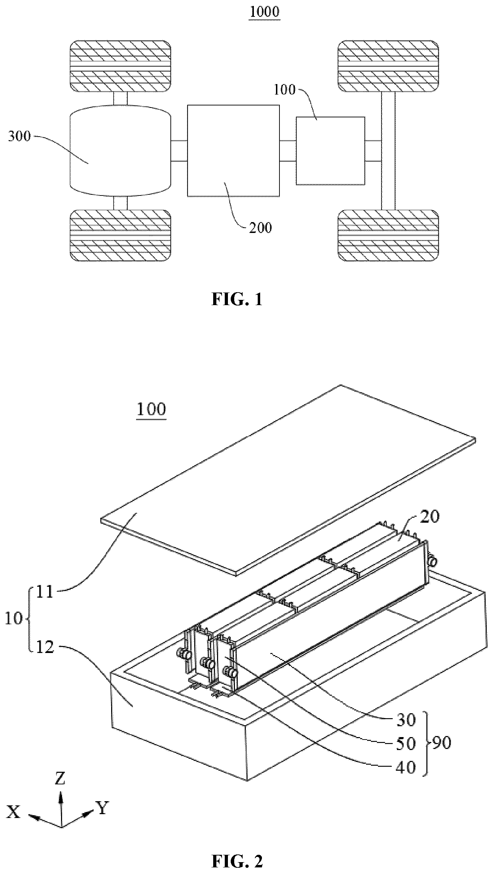

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

**In** some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

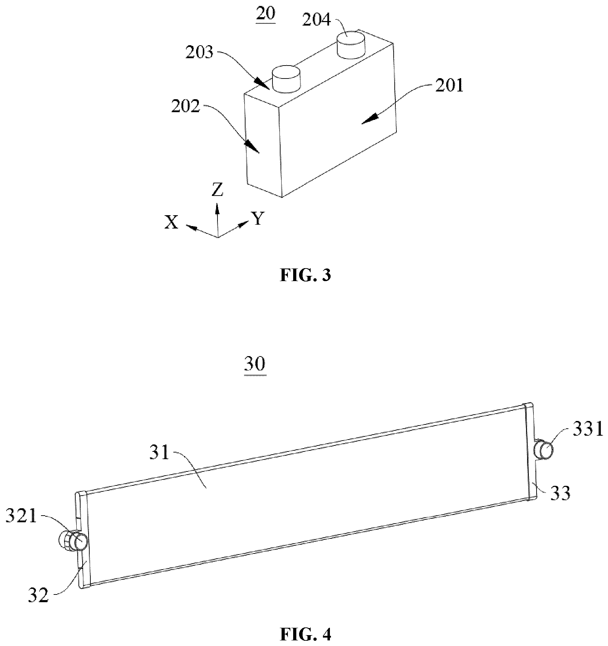

According to some embodiments of the present disclosure, referring to FIG. 2 and FIG. 3, FIG. 2 is a structural schematic diagram of a battery 100 provided in some embodiments of the present disclosure, and FIG. 3 is a structural schematic diagram of a battery cell 20 provided in some embodiments of the present disclosure. The embodiment of the present disclosure provides a battery 100, which includes a battery cell 20 and a thermal management component 90. The battery cell 20 includes a first surface 201 and a second surface 202, and the thermal management component 90 includes a first thermal management component 30 and a second thermal management component 50. The first thermal management component 30 is arranged on the first surface 201, and the first thermal management component 30 is configured to adjust the temperature of the battery cell 20. The second thermal management component 50 is arranged on the second surface 202, and the second thermal management component 50 is configured to adjust the temperature of the battery cell 20.

The battery cell 20 refers to the smallest unit comprising the battery 100. The battery cell 20 can be a secondary battery or a primary battery; it can also be a lithium-sulfur battery, sodium-ion battery, magnesium-ion battery, or other types, but is not limited to these.

In the battery 100, one or multiple battery cells 20 can be provided. The multiple battery cells 20 can be connected in series, parallel, or hybrid. A hybrid connection refers to having both series and parallel connections among multiple battery cells 20. The battery 100 can also comprise other structures. For example, the battery 100 can also comprise a busbar component, which is configured for achieving electrical connections between the multiple battery cells 20.

When the battery 100 includes multiple battery cells 20, the multiple battery cells 20 can be arranged in one or more rows, or stacked in multiple layers, with each layer of battery cells 20 arranged in one or more rows.

The battery 100 can be provided with a container configured for housing the battery cells 20, or alternatively, the battery 100 cannot include a container for housing the battery cells 20. The electrical device can be provided with a mounting chamber for the battery cells 20.

The first surface 201 and the second surface 202 are each a certain outer surface of the battery cell 20. The first surface 201 and the second surface 202 can be adjacent to each other or non-adjacent.

The first thermal management component 30 can be a component with a warming function, a component with a cooling function, or a component with both a warming and a cooling function.

The first thermal management component 30 can directly abut the first surface 201 of the battery cell 20 for heat exchange, or it can exchange heat with the first surface 201 of the battery cell 20 through a conduction element. For example, the first surface 201 can be coated with a thermal conductive adhesive layer, and the first thermal management component 30 can adhere to the first surface 201 through the thermal conductive adhesive layer.

One or multiple first thermal management components 30 can be provided, and multiple first thermal management components 30 can be arranged only on one first surface 201 of the battery cell 20, or the battery cell 20 can also include multiple first surfaces 201, where multiple first thermal management components 30 correspond one-to-one with multiple first surfaces 201.

When multiple first thermal management components 30 are arranged on one first surface 201 of the battery cell 20, the multiple first thermal management components 30 can be arranged in a stacked manner, that is, in the multiple first thermal management components 30, only one first thermal management component 30 is in contact with the battery cell 20. The multiple first thermal management components 30 can also be provided side-by-side. That is, the multiple first thermal management components 30 are all in contact with the battery cell 20.

The second thermal management component 50 can be a component with a warming function, a component with a cooling function, or a component with both a warming and a cooling function.

The second thermal management component 50 can directly abut the second surface 202 of the battery cell 20 for heat exchange, or it can exchange heat with the first surface 201 of the battery cell 20 through a conduction element. For example, the second surface 202 can be coated and provided with a thermal conductive adhesive layer, and the first thermal management component 30 can adhere to the second surface 202 through the thermal conductive adhesive layer.

One or multiple second thermal management components 50 can be provided, and multiple second thermal management components 50 can be arranged only on one second surface 202 of the battery cell 20, or the battery cell 20 can also include multiple second surfaces 202, where multiple second thermal management components 50 correspond one-to-one with multiple second surfaces 202.

When multiple second thermal management components 50 are arranged on one second surface 202 of the battery cell 20, the multiple second thermal management components 50 can be arranged in a stacked manner, that is, in the multiple second thermal management components 50, only one second thermal management component 50 is in contact with the battery cell 20. The multiple second thermal management components 50 can also be provided side-by-side. That is, the multiple second thermal management components 50 are all in contact with the battery cell 20.

The first thermal management component 30 and the second thermal management component 50 can be of the same type of thermal management component. For example, both the first thermal management component 30 and the second thermal management component 50 can be water-cooling plates. The first thermal management component 30 and the second thermal management component 50 can also be different types of thermal management components. For example, the first thermal management component 30 can be a water-cooling plate, and the second thermal management component 50 can be an electric heating component. In the embodiment where multiple first thermal management components 30 and second thermal management components 50 are provided, the first thermal management component 30 and the second thermal management component 50 can be partially of the same type of thermal management component, and partially of different types of thermal management components. For example, the first thermal management component 30 can include water cooling components and electric heating components, and the second thermal management component 50 can include only electric heating components.

In the battery 100 of the embodiments of the present disclosure, firstly, by jointly regulating the temperature of the battery cell 20 through the first thermal management component 30 and the second thermal management component 50, the temperature adjustment efficiency of the battery cell 20 is improved. Secondly, the first thermal management component 30 and the second thermal management component 50 are arranged on different surfaces of the battery cell 20, which increases the contact area between the thermal management component 90 and the battery cell 20, and thus improves the temperature adjustment efficiency of the battery cell 20.

According to some embodiments of the present disclosure, referring to FIG. 3, the first surface 201 and the second surface 202 are two adjacent surfaces of the battery cell 20.

When the first surface 201 and the second surface 202 are adjacent, the first surface 201 and the second surface 202 can be directly connected, or a transition surface can be provided between the first surface 201 and the second surface 202, such as a transition curved surface or a transition chamfered surface.

When the first surface 201 and the second surface 202 are adjacent, the contact positions between the first thermal management component 30, the second thermal management component 50, and the battery cell 20 are more concentrated, thereby reducing the time required to adjust the temperature of the battery cell 20, and thus further improving the temperature adjustment efficiency of the battery cell 20.

According to some embodiments of the present disclosure, the first thermal management component 30 is configured to heat or cool the battery cell 20; and/or the second thermal management component 50 is configured to heat the battery cell 20.

When the first thermal management component 30 is configured to heat the battery cell 20, the second thermal management component 50 can be configured to heat the battery cell 20.

When the first thermal management component 30 is configured to cool the battery cell 20, the second thermal management component 50 can also be configured to heat the battery cell 20.

It can be understood that the first thermal management component 30 is a thermal management component capable of both heating the battery cell 20 and cooling the battery cell 20, and the second thermal management component 50 is a heating component capable of heating the battery cell 20.

When both the first thermal management component 30 and the second thermal management component 50 are configured to heat the battery cell 20, the efficiency of heating the battery cell 20 is improved. When the first thermal management component 30 is configured to cool the battery cell 20, the second thermal management component 50 can be configured to heat the battery cell 20, thus enabling the battery thermal management system to perform corresponding temperature adjustments through different thermal management components when the battery cell 20 is subjected to different ambient temperatures. This allows for a wider overall adjustable temperature range and greater maneuverability of the battery thermal management system. Moreover, the temperature of the battery cell 20 can also be adjusted locally by different thermal management components, making the overall temperature of the battery cell 20 more uniform and improving the effect of the temperature regulation of the battery cell 20.

According to some embodiments of the present disclosure, the first thermal management component 30 is configured to heat or cool the battery cell 20; and/or the second thermal management component 50 is configured to cool the battery cell 20.

When the first thermal management component 30 is configured to heat the battery cell 20, the second thermal management component 50 can be configured to cool the battery cell 20.

When the first thermal management component 30 is configured to cool the battery cell 20, the second thermal management component 50 can also be configured to cool the battery cell 20.

When both the first thermal management component 30 and the second thermal management component 50 are configured to cool the battery cell 20, the efficiency of cooling the battery cell 20 is improved. When the first thermal management component 30 is configured to heat the battery cell 20, the second thermal management component 50 is configured to cool the battery cell 20. This facilitates the adjustment of the temperature of the localized temperature of the battery cell 20, thus making the overall temperature of the battery cell 20 more uniform and improving the effect of the temperature regulation of the battery cell 20.

According to some embodiments of the present disclosure, referring to FIG. 4, FIG. 4 is a schematic diagram of a structure of a first thermal management component 30 provided in some embodiments of the present disclosure. The first thermal management component 30 includes a first accommodating cavity, and the first accommodating cavity is configured to accommodate a heat exchange fluid.

The first thermal management component 30 can include a plate body 31, a first current collector 32, and a second current collector 33, with multiple flow channels formed inside the plate body 31 to form a first accommodating cavity. The inlets of the multiple flow channels are in communication with the first current collector 32, and the outlets of the multiple flow channels are in communication with the second current collector 33. The first current collector 32 is provided with a medium inlet 321, and the second current collector 33 is provided with a medium outlet 331.

The operation process of the first thermal management component 30 can be as follows. A fluid medium can enter the first current collector 32 through the medium inlet 321, then flow into each of the flow channels, and the fluid medium discharged from the flow channels is collected in the second current collector 33 and discharged through the medium outlet 331.

The plate body 31 can directly abut the battery cell 20 for heat exchange, or it can perform heat exchange with the battery cell 20 through a conduction element. For example, the surface wall of the battery cell 20 can be coated with an adhesive layer, and the plate body 31 can be bonded to the battery cell 20 through the adhesive layer.

The plate body 31 can be a harmonica-tube-type plate body 31.

The first thermal management component 30, which accommodates the heat exchange fluid, can enable heat to be uniformly distributed through the flow of fluid in the accommodating cavity, thereby reducing the probability of heat concentration in local regions and also increasing heat transfer efficiency. This improves the heat exchange effect of the first thermal management component 30.

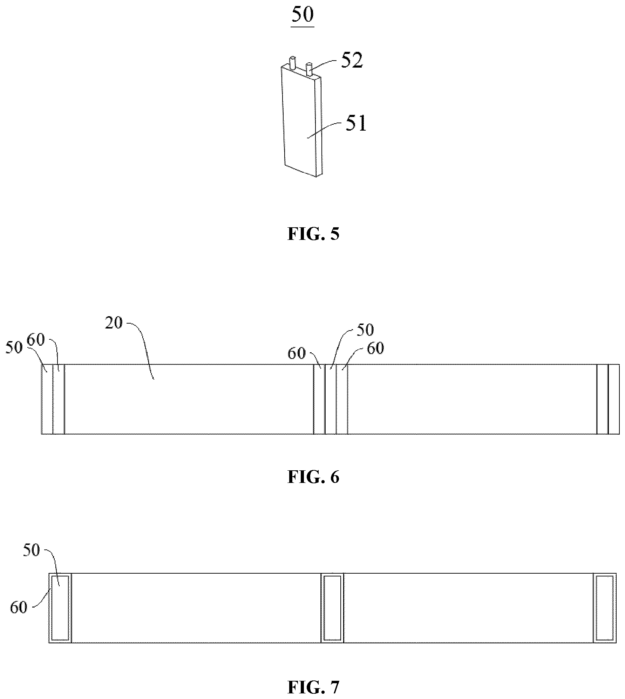

According to some embodiments of the present disclosure, referring to FIG. 5, FIG. 5 is a schematic diagram of a structure of a second thermal management component 50 provided in some embodiments of the present disclosure. The second thermal management component 50 is an electric heating component.

The electric heating component is a component that converts electrical energy into thermal energy. For example, the electric heating component can include a resistive heating element. When current flows through the resistive heating element, the resistive heating element generates heat to warm the battery cell 20.

The second thermal management component 50 can include a first heating body 51 and multiple first connection portions 52. The multiple first connection portions 52 are electrically connected to the first heating body 51. The first heating body 51 is configured to adjust the temperature of the battery cell 20, and the first connection portions 52 are configured to connect the conducting wires. For example, two first connection portions 52 can be provided, one for connecting the positive conducting wire and the other for connecting the negative conducting wire.

The second thermal management component 50 is an electric heating component. On the one hand, the electric heating component has the advantage of rapid temperature increase, which enhances the temperature adjustment efficiency of the battery cell 20. On the other hand, the electric heating component is powered through a conducting wire, and the conducting wire is easy to arrange, thereby facilitating the mounting and arrangement of the second thermal management component 50.

In some embodiments, the first thermal management component 30 includes an accommodating cavity that houses a heat exchange fluid, the second thermal management component 50 is an electric heating component, and the first thermal management component 30 and the second thermal management component 50 adopt different forms of thermal management arrangements. This can reduce the risk of simultaneous failure of both components leading to uncontrolled thermal management within the battery 100, thereby improving the overall thermal management reliability of the battery 100.

According to some embodiments of the present disclosure, the second thermal management component 50 is a PTC heater and a heating film.

The PTC (positive temperature coefficient) heater includes a housing and a heating unit, the heating unit is housed in the housing. The housing can directly abut the battery cell 20 for heat exchange, or it can perform heat exchange with the battery cell 20 through a conduction element. For example, the surface wall of the battery cell 20 can be coated with an adhesive layer, and the housing can be bonded to the battery cell 20 through the adhesive layer.

The heating film is a flexible heating thin plate structure.

The PTC heater has the advantage of a long service life, thereby reducing the usage cost of the battery 100. The heating film has a soft, deformable structure that can tightly adhere to the battery cell 20, thus increasing the contact area between the second thermal management component 50 and the battery cell 20. Therefore, this improves the heating efficiency of the battery cell 20.

The specific structure and working principle of the PTC heater and heating film are well known to those skilled in the art, and will not be further elaborated herein.

According to some embodiments of the present disclosure, the second thermal management component 50 can include a second accommodating cavity, and the second accommodating cavity is configured to house a heat exchange fluid.

According to some embodiments of the present disclosure, referring to FIG. 6 and FIG. 7, FIG. 6 is a schematic diagram of a cooperation between a first buffering component 60 and a battery cell 20 according to some embodiments of the present disclosure (with a second thermal management component 50 sandwiched between two first buffering components 60, between two battery cells 20); FIG. 7 is a schematic diagram of a cooperation between a first buffering component 60 and a battery cell 20 according to other embodiments of the present disclosure (with a second thermal management component 50 housed within a first housing cavity of a first buffering component 60). The battery 100 also includes a first buffering component 60, and at least a portion of the first buffering component 60 is arranged between the battery cell 20 and the second thermal management component 50.

The first buffering component 60 is a component capable of deformation under pressure, and the first buffering component 60 can also be made of an insulating material, thus ensuring electrical insulation between the second thermal management component 50 and the battery cell 20. This improves the safety of the battery 100.

**In** the embodiment, the first buffering component 60 can be made of rubber or soft polyvinyl chloride.

The first buffering component 60 can be a sheet-like structure, arranged between the first surface 201 of the battery cell 20 and the second thermal management component 50.

The first buffering component 60 can also wrap around the battery cell 20, and partially be positioned between the first surface 201 of the battery cell 20 and the second thermal management component 50.

The first buffering component 60 can be arranged on the side of the second thermal management component 50 which is closer to the battery cell 20, or on the side of the second thermal management component 50 which is farther from the battery cell 20.

When the battery cell 20 is provided on both sides of the second thermal management component 50, the first buffering component 60 can be arranged on both sides of the second thermal management component 50, or it can only be arranged on one side.

The first buffering component 60 can buffer the pressure exerted by the battery cell 20 on the second thermal management component 50 when the battery cell 20 expands, thereby reducing the risk of damage to the second thermal management component 50 due to pressure and enhancing the safety of the battery 100.

According to some embodiments of the present disclosure, with reference to FIG. 6, the first buffering component 60 and the second thermal management component 50 are arranged in a stacked manner.

The first buffering component 60 can be affixed to the surface wall of the second thermal management component 50 facing the battery cell 20.

The first buffering component 60 can abut the second thermal management component 50, or it can be bonded to the second thermal management component 50.

The first buffering component 60 and the second thermal management component 50 are arranged in a stacked manner, thus allowing the battery cell 20 to preferentially compress the first buffering component 60 when the battery cell 20 expands in the direction where the second thermal management component 50 is arranged. This reduces the probability of failure or damage to the second thermal management component 50 due to compression. Alternatively, when the second thermal management component 50 is therein arranged with a flow channel for containing heat exchange fluid, the likelihood of the second thermal management component 50 being compressed due to the compression of the flow channel, which further results in poor heat exchange performance, can be reduced.

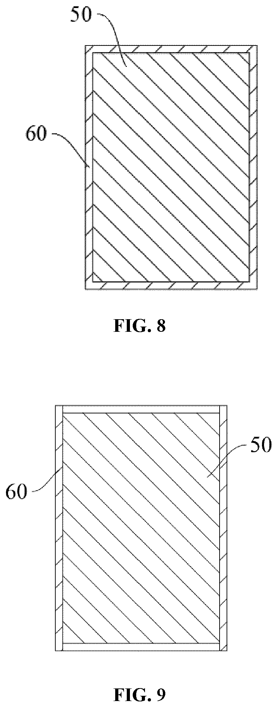

According to some embodiments of the present disclosure, referring to FIG. 8 and FIG. 9, FIG. 8 is a schematic diagram of a cooperation between a first buffering component 60 and a second thermal management component 50 according to some embodiments of the present disclosure (with a first housing cavity of a first buffering component 60 being a sealed chamber); FIG. 9 is a schematic diagram of a cooperation between a first buffering component 60 and a second thermal management component 50 according to other embodiments of the present disclosure (with a first housing cavity of a first buffering component 60 provided with an opening). A first housing cavity is formed inside the first buffering component 60, and the second thermal management component 50 is housed within the first housing cavity.

The first housing cavity can be a closed chamber, and the second thermal management component 50 can be completely housed in the first housing cavity.

The first housing cavity can also be a chamber arranged with an opening, and the second thermal management component 50 can enter the first housing cavity through the opening of the first housing cavity.

By housing the second thermal management component 50 within the first housing cavity, on the one hand, the risk of disengaging the second thermal management component 50 and the first buffering component 60 is reduced. On the other hand, since the battery cell 20 is directly against the second thermal management component 50, the second thermal management component 50 is pressurized and damaged when the battery cell 20 expands; however, this risk is reduced.

According to some embodiments of the present disclosure, when the second thermal management component 50 is a heating film, the second thermal management component 50 can be bent to form an internally hollow cylindrical structure, and the first buffering component 60 can be inserted within the second thermal management component 50.

According to some embodiments of the present disclosure, with reference to FIG. 2 and FIG. 3, the battery cell 20 includes two opposing first surfaces 201, and the two first surfaces 201 are provided with the first thermal management component 30.

The two first surfaces 201 can be in a facing state, meaning the normal of the two first surfaces 201 are collinear. For example, the battery cell 20 can be rectangular in shape, wherein the two first surfaces 201 can be the two surfaces opposite each other in the length direction of the battery cell 20; and it can also be two surfaces opposite each other in the width direction, and can also be two surfaces opposite each other in the thickness direction.

The two first surfaces 201 can also be in a non-facing state, where the angle between the normal of the two first surfaces 201 is less than 90°.

Each of the two first surfaces 201 can be provided with one first thermal management component 30, or they can each be provided with multiple first thermal management components 30.

By arranging the first thermal management component 30 on both opposing first surfaces 201 of the battery cell 20, the contact area between the first thermal management component 30 and the battery cell 20 is increased, thereby improving the efficiency of the first thermal management component 30 in adjusting the temperature of the battery cell 20, and also enhancing the uniformity when regulating the temperature of the battery cell 20.

According to some embodiments of the present disclosure, with reference to FIG. 2 and FIG. 3, the battery cell 20 includes two opposing second surfaces 202, and the two second surfaces 202 are provided with the second thermal management component 50.

The two second surfaces 202 can be in a facing state, meaning the normal of the two second surfaces 202 are collinear. For example, the battery cell 20 can be rectangular in shape, wherein the two second surfaces 202 can be the two surfaces opposite each other in the length direction of the battery cell 20; and it can also be two surfaces opposite each other in the width direction, and can also be two surfaces opposite each other in the thickness direction.

The two second surfaces 202 can also be in a non-facing state, where the angle between the normal of the two second surfaces 202 can be less than 90°.

Each of the two second surfaces 202 can be provided with one second thermal management component 50, or they can each be provided with multiple second thermal management components 50.

By arranging the second thermal management component 50 on both opposing second surfaces 202 of the battery cell 20, the contact area between the second thermal management component 50 and the battery cell 20 is increased, thereby improving the efficiency of the second thermal management component 50 in adjusting the temperature of the battery cell 20, and also enhancing the uniformity when regulating the temperature of the battery cell 20.

According to some embodiments of the present disclosure, the first surface 201 or the second surface 202 is the largest surface of the battery cell 20.

In the embodiment, the first surface 201 can be the largest surface of the battery cell 20, or the second surface 202 can be the largest surface of the battery cell 20. Moreover, the first surface 201 and the second surface 202 can have equal areas and are both the largest surfaces among the multiple surfaces of the battery cell 20.

The largest surface of the battery cell 20 can be one or more. For example, if the battery cell 20 is cylindrical, the largest surface of the battery cell 20 can be the outer peripheral surface of the battery cell 20, in which case the number of the largest surfaces of the battery cell 20 can be one. Further, the largest surfaces of the battery cell 20 can be the two circular end surfaces of the battery cell 20, in which case the number of the largest surfaces of the battery cell 20 can be two. If the battery cell 20 is a rectangular prism, the number of the largest surfaces of the battery cell 20 can be two or four. If the battery cell 20 is a cube, all surfaces of the battery cell 20 are the largest surfaces.

If the battery cell 20 is a soft pack battery cell 20, the surface of the battery cell 20 can be determined by the projected area of the surface on a reference plane, and the reference plane can be a plane facing the surface. For example, if the battery cell 20 is a soft-packed rectangular prism battery cell 20, the reference planes can include three: a first reference plane perpendicular to the length direction of the battery cell 20, a second reference plane perpendicular to the width direction of the battery cell 20, and a third reference plane perpendicular to the thickness direction of the battery cell 20. The projections of the two surfaces of the battery cell 20 in the length direction on the first reference plane can be approximated as the two surfaces in the length direction of the battery cell 20, and similarly for the two surfaces in the width direction of the battery cell 20 and the two surfaces of the thickness direction of the battery cell 20, thus determining the largest surface of the battery cell 20.

By arranging the first thermal management component 30 or the second thermal management component 50 on the largest surface of the battery cell 20, the contact area between the first thermal management component 30 or second thermal management component 50 and the battery cell 20 is maximized, thus improving the efficiency of temperature regulation for the battery cell 20.

In embodiments where the first thermal management component 30 is a water-cooling plate, since the water-cooling plate can both heat the battery cell 20 and cool the battery cell 20, arranging the first thermal management component 30 on the largest surface of the battery cell 20 can enhance the efficiency of the first thermal management component 30 when heating the battery 100 and when cooling the battery cell 20.

According to some embodiments of the present disclosure, the battery 100 further includes a box 10 with an opening, where the box 10 is configured to accommodate the battery cell 20. The box 10 includes a bottom wall opposite the opening, and a first thermal management component 30 or a second thermal management component 50 is arranged between the battery cell 20 and the bottom wall.

The box 10 can comprise a first part 11 and a second part 12, wherein the first part 11 and the second part 12 are fitted together. The first part 11 and the second part 12 together define the holding space configured to house the battery cell 20. The second part 12 can be a hollow structure open at one end, and the first part 11 can be a plate-like structure. The first part 11 is capped over an opening side of the second part 12 so that the first part 11 and the second part 12 together define a holding space. Additionally, both the first part 11 and the second part 12 can be hollow structures open at one end, and an opening side of the first part 11 is capped over an opening side of the second part 12. Of course, the box 10 formed by the first part 11 and the second part 12 can be of a variety of shapes, e.g., cylindrical, rectangular, etc.

The box 10 can be made of a rigid material or be a flexible film that wraps around the module formed by the battery cell 20.

The bottom wall can be any of the walls of the box 10 that provides support to the battery cell 20.

One or multiple first thermal management components 30 or the second thermal management components 50 can be arranged between the battery cell 20 and the bottom wall.

The projection of the battery cell 20 on the bottom wall can lie within the range of the first thermal management component 30 or the second thermal management component 50.

By arranging the first thermal management component 30 or the second thermal management component 50 between the battery cell 20 and the bottom wall, the surface of the battery cell 20 that is obscured by the bottom wall can also be temperature-adjusted by the first thermal management component 30 or the second thermal management component 50, thus further increasing the contact area between the thermal management component and the battery cell 20, and enhancing the efficiency of temperature regulation components in regulating the temperature of the battery cell 20.

In the embodiment where the first thermal management component 30 is a water-cooling plate, arranging the first thermal management component 30 between the battery cell 20 and the bottom wall facilitates the placement of piping connected to the water-cooling plate.

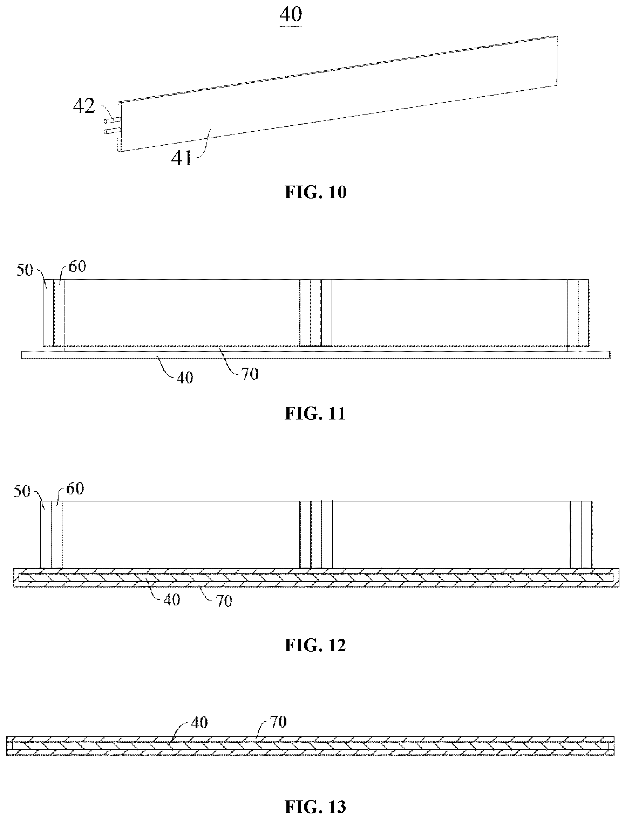

According to some embodiments of the present disclosure, referring to FIG. 10 and FIG. 11, FIG. 10 is a schematic diagram of a structure of a third thermal management component 40 provided in some embodiments of the present disclosure; and FIG. 11 is a schematic diagram of a cooperation between a second buffering component 70 and a battery cell 20 according to some embodiments of the present disclosure (with a third thermal management component 40 and a second buffering component 70 being arranged in a stacked manner); The battery cell 20 further includes a third surface 203, and the thermal management component 90 further includes a third thermal management component 40. The third thermal management component 40 is arranged on the third surface 203, and the third thermal management component 40 is configured to adjust the temperature of the battery cell 20.

The first surface 201, the second surface, 202, and the third surface 203 are adjacent to each other in pairs. Any two of the three surfaces can be adjacent, with the remaining surface not adjacent to the two adjacent surfaces. Or, all three surfaces can be non-adjacent.

The third thermal management component 40 can be a component with a warming function, a component with a cooling function, or a component with both a warming and a cooling function.

The third thermal management component 40 can directly abut the third surface 203 of the battery cell 20 for heat exchange, or it can exchange heat with the third surface 203 of the battery cell 20 through a conduction element. For example, the third surface 203 of the battery cell 20 can be coated and provided with a thermal conductive adhesive layer, and the first thermal management component 30 can adhere to the battery cell 20 through the thermal conductive adhesive layer.

One or multiple third thermal management components 40 can be provided, and multiple third thermal management components 40 can be arranged only on the first one of the third surfaces 203 of the battery cell 20, or the battery cell 20 can also include multiple third surfaces 203, where multiple third thermal management components 40 correspond one-to-one with multiple third surfaces 203.

When multiple third thermal management components 40 are arranged on one third surface 203 of the battery cell 20, the multiple third thermal management components 40 can be arranged in a stacked manner, that is, in the multiple first thermal management components 30, only one third thermal management component 40 is in contact with the battery cell 20. The multiple third thermal management components 40 can also be provided side-by-side. That is, the multiple third thermal management components 40 are all in contact with the battery cell 20.

The first thermal management component 30, the second thermal management component 50, and the third thermal management component 40 can all be of the same type of thermal management component. The third thermal management component 40 can also be a thermal management component of the same type as only the second thermal management component 50, or a thermal management component of the same type as only as the first thermal management component 30.

By arranging the third thermal management component 40, the contact area between the thermal management component 90 and the battery cell 20 is further increased, thus improving the efficiency of the thermal management component 90 in adjusting the temperature of the battery cell 20.

According to some embodiments of the present disclosure, referring to FIG. 3, the first surface 201, the second surface 202, and the third surface 203 are adjacent in pairs.

When the first surface 201, the second surface 202, and the third surface 203 are adjacent in pairs, the first surface 201, the second surface 202, and the third surface 203 can intersect at a vertex or at a face. For example, the first surface 201, the second surface 202, and the third surface 203 can intersect at a curved surface.

Any two surfaces among the first surface 201, the second surface 202, and the third surface 203 can be directly connected, or the two surfaces can have a transitional surface, such as a transitional curved surface or transitional chamfered surface.

When the first surface 201, the second surface 202, and the third surface 203 are adjacent to each other in pairs, the contact surfaces between the thermal management component 90 and the battery cell 20 are more concentrated, thereby improving the efficiency of temperature adjustment for the battery cell 20.

According to some embodiments of the present disclosure, with reference to FIG. 2, the battery 100 further includes a box 10 with an opening, where the box 10 is configured to accommodate the battery cell 20. The box 10 includes a bottom wall opposite the opening, and a third thermal management component 40 is arranged between the battery cell 20 and the bottom wall.

In the embodiment, the third surface 203 can be the surface of the battery cell 20 facing the bottom wall.

On the side of the battery cell 20 that faces away from the bottom wall, a third thermal management component 40 can also be provided.

One third thermal management component 40 can be arranged between the battery cell 20 and the bottom wall, or multiple third thermal management components 40 can be arranged.

By arranging the third thermal management component 40 between the battery cell 20 and the bottom wall, the surface of the battery cell 20 shielded by the bottom wall can also be temperature-regulated by the third thermal management component 40, thus improving the uniformity of temperature adjustment for the battery cell 20.

According to some embodiments of the present disclosure, the third thermal management component 40 is an electric heating component.

The third thermal management component 40 can include a second heating body 41 and multiple second connection portions 42. The multiple second connection portions 42 are electrically connected to the second heating body 41. The second heating body 41 is configured to adjust the temperature of the battery cell 20, and the second connection portions 42 are configured to connect the conducting wires. For example, two second connection portions 42 can be provided, one for connecting the positive conducting wire and the other for connecting the negative conducting wire.

The third thermal management component 40 is an electric heating component. On the one hand, the electric heating component has the advantage of rapid temperature increase, which enhances the temperature adjustment efficiency of the battery cell 20. On the other hand, the electric heating component is powered through a conducting wire, and the conducting wire is easy to arrange, thereby facilitating the mounting and arrangement of the third thermal management component 40. Additionally, in embodiments where the second thermal management component 50 is also an electric heating component, the third thermal management component 40 works in conjunction with the second thermal management component 50, thus further enhancing the efficiency of temperature adjustment for the battery cell 20.

According to some embodiments of the present disclosure, the third thermal management component 40 is a PTC heater and a heating film.

The PTC heater has the advantage of a long service life, The selection of the third thermal management component 40 as a PTC heater reduces the usage cost of the battery 100. The heating film has a soft, deformable structure that can tightly adhere to the battery cell 20, thus increasing the contact area between the third thermal management component 40 and the battery cell 20. Therefore, this improves the heating efficiency of the battery cell 20. In the embodiment where the third thermal management component 40 is arranged between the bottom wall and the battery cell 20, the third thermal management component 40 is a heating film, which can reduce the risk of the third thermal management component 40 being damaged due to pressure.

The third thermal management component 40 can include a third accommodating cavity, and the third accommodating cavity is configured to hold a heat exchange fluid.

According to some embodiments of the present disclosure, with reference to FIG. 11, the battery 100 also includes a second buffering component 70, and at least a portion of the second buffering component 70 is arranged between the battery cell 20 and the third thermal management component 40.

The second buffering component 70 is a component capable of deformation under pressure, and the second buffering component 70 can also be made of an insulating material, thus ensuring electrical insulation between the third thermal management component 40 and the battery cell 20. This improves the safety of the battery 100.

**In** the embodiment, the second buffering component 70 can be made of rubber or soft polyvinyl chloride.

The second buffering component 70 can be a sheet-like structure, arranged between the battery cell 20 and the third thermal management component 40.

The second buffering component 70 can also wrap around the battery cell 20, and partially be positioned between the battery cell 20 and the third thermal management component 40.

The second buffering component 70 can be arranged on the side of the third thermal management component 40 which is closer to the battery cell 20, or on the side of the third thermal management component 40 which is farther from the battery cell 20.

When the battery cell 20 is provided on both sides of the third thermal management component 40, the second buffering component 70 can be arranged on both sides of the third thermal management component 40, or it can only be arranged on one side. The second buffering component 70 can buffer the pressure exerted by the battery cell 20 on the third thermal management component 40 when the battery cell 20 expands, thereby reducing the risk of damage to the third thermal management component 40 due to pressure and enhancing the safety of the battery 100.

According to some embodiments of the present disclosure, with reference to FIG. 11, the second buffering component 70 and the third thermal management component 40 are arranged in a stacked manner.

The second buffering component 70 can be affixed to the surface wall of the third thermal management component 40 facing the battery cell 20.

The second buffering component 70 can abut the third thermal management component 40, or it can be bonded to the third thermal management component 40.

The second buffering component 70 and the third thermal management component 40 are arranged in a stacked manner, which enables the battery cell 20 to preferentially compress the second buffering component 70, when the battery cell 20 expands in the direction where the third thermal management component 40 is arranged. This reduces the probability of failure or damage to the third thermal management component 40 due to compression. Alternatively, when the third thermal management component 40 is therein arranged with a flow channel for containing heat exchange fluid, the likelihood of the third thermal management component 40 being compressed due to the compression of the flow channel, which further results in poor heat exchange performance, can be reduced.

According to some embodiments of the present disclosure, referring to FIG. 12 and FIG. 13, FIG. 12 is a schematic diagram of a cooperation between a second buffering component 70 and a battery cell 20 according to some embodiments of the present disclosure (with a third thermal management component 40 housed in a second housing cavity of a second buffering component 70, where a first housing cavity is a sealed chamber); and FIG. 13 is a schematic diagram of a cooperation between a second buffering component 70 and a third thermal management component 40 according to some embodiments of the present disclosure (with a second housing cavity of a second buffering component 70 provided with an opening). A second housing cavity is formed inside the second buffering component 70, and the third thermal management component 40 is housed within the second housing cavity.

The second housing cavity can be a closed chamber, and the third thermal management component 40 can be completely housed in the second housing cavity.

The second housing cavity can also be a chamber arranged with an opening, and the third thermal management component 40 can enter the second housing cavity through the opening of the second housing cavity.

By housing the third thermal management component 40 within the second housing cavity, on the one hand, the risk of disengaging the third thermal management component 40 and the second buffering component 70 is reduced. On the other hand, since the battery cell 20 is directly against the third thermal management component 40, the third thermal management component 40 is pressurized and damaged when the battery cell 20 expands; however, this risk is reduced.

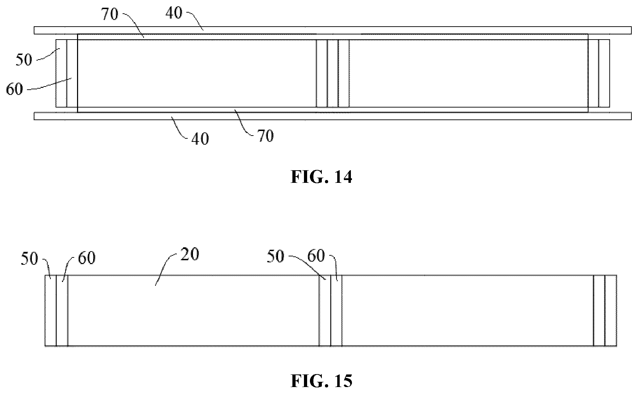

According to some embodiments of the present disclosure, with reference to FIG, 14, FIG. 14 is a schematic diagram of a cooperation between a third thermal management component 40 and a battery cell 20 according to some embodiments of the present disclosure (with both third surfaces 203 of the battery cell 20 being provided with third thermal management components 40). The battery cell 20 includes two opposing third surfaces 203, and the two third surfaces 203 are provided with the third thermal management component 40.

The two third surfaces 203 can be in a facing state, meaning the normal of the two third surfaces 203 are collinear. For example, the battery cell 20 can be rectangular in shape, wherein the two third surfaces 203 can be the two surfaces opposite each other in the length direction of the battery cell 20; and it can also be two surfaces opposite each other in the width direction, and can also be two surfaces opposite each other in the thickness direction.

The two third surfaces 203 can also be in a non-facing state, where the angle between the normal of the two third surfaces 203 can be less than 90°.

Each of the two second surfaces 202 can be provided with one third thermal management component 40, or they can be provided with multiple third thermal management components 40. By arranging the third thermal management component 40 on both opposing third surfaces 203 of the battery cell 20, the contact area between the third thermal management component 40 and the battery cell 20 is increased, thereby improving the efficiency of the third thermal management component 40 in adjusting the temperature of the battery cell 20, and also enhancing the uniformity when regulating the temperature of the battery cell 20.

According to some embodiments of the present disclosure, the third surface 203 is the largest surface of the battery cell 20.

When the third surface 203 is the largest surface, the contact area between the third thermal management component 40 and the battery cell 20 is maximized, thus improving the efficiency of the third thermal management component 40 in adjusting the temperature of the battery cell 20.

According to some embodiments of the present disclosure, with reference to FIG. 2, the battery 100 includes multiple rows of battery cells 20 and multiple first thermal management components 30, wherein the multiple first thermal management components 30 are arranged along a first direction. A row of battery cells 20 is arranged between two adjacent first thermal management components 30 along the first direction.

The first direction can be any one of the length direction, the width direction, or the thickness direction of the battery cell 20. In the embodiment shown in FIG. 2, X represents the first direction.

The two surfaces of the battery cell 20 opposite each other in the first direction can be the two first surfaces 201.

**In** the embodiment, each row of battery cells 20 can include one battery cell 20 or multiple battery cells 20.

In the embodiment where each row of the battery cells 20 includes multiple battery cells 20, the total length of the multiple battery cells 20 along the arrangement direction can be less than or equal to the size of the first thermal management component 30 along the arrangement direction, thus ensuring that each battery cell 20 in each row of the battery cells 20 can fully contact the first thermal management component 30.

Since multiple first thermal management components 30 are arranged in the first direction, each row of the battery cells 20 can be housed between two adjacent first thermal management components 30, thus allowing multiple battery cells 20 to share one first thermal management component 30. This reduces the number of first thermal management components 30 required for the battery 100, and saves on the manufacturing cost of the battery 100. On the other hand, in the embodiment where the battery 100 includes a box 10, fewer first thermal management components 30 allow for fewer wires or pipelines occupying the internal space of the box 10. This allows the box 10 to accommodate more battery cells 20, thereby increasing the energy density of the battery 100.

According to some embodiments of the present disclosure, referring to FIG. 2 and FIG. 15, and in conjunction with FIG. 6, FIG. 15 is a schematic diagram of a cooperation between a first buffering component 60 and a battery cell 20 according to further embodiments of the present disclosure (with one first buffering component 60 and one second thermal management component 50 arranged between two battery cells 20). In each row of battery cells 20, a second thermal management component 50 is arranged on both sides of each battery cell 20 along a second direction, and a second thermal management component 50 is arranged between two adjacent battery cells 20. The first direction is perpendicular to the second direction.

The first direction and the second direction can be any one of the length direction, the width direction, or the thickness direction of the battery cell 20. In the embodiment shown in FIG. 2, Y represents the second direction.

The two surfaces of the battery cell 20 opposite each other in the second direction can be the two second surfaces 202.

In the embodiment where at least a portion of the first buffering component 60 is arranged between the battery cell 20 and the second thermal management component 50, between two adjacent battery cells 20, one second thermal management component 50 can be sandwiched between two first buffering components 60, or one second thermal management component 50 and one first buffering component 60 can be arranged in a stacked manner.

By arranging the second thermal management components 50 on both sides of each battery cell 20 in each row of battery cells 20 along the second direction, it ensures that the temperature of each battery cell 20 in each row of battery cells 20 can be regulated by the corresponding second thermal management component 50. A second thermal management component 50 is arranged between two adjacent battery cells 20 for heating, thus allowing the two battery cells 20 to share one second thermal management component 50. This reduces the number of second thermal management components 50 required and lowers the manufacturing cost of the battery 100.

According to some embodiments of the present disclosure, with reference to FIG. 2, the thermal management component further includes a third thermal management component 40. The third thermal management component 40 is arranged along the third direction on at least one side of the battery cell 20, and the third thermal management component 40 is configured to regulate the temperature of the battery cell 20. The first direction, the second direction, and the third direction are mutually perpendicular.

In the embodiment shown in FIG. 2, Z represents the third direction.

The two surfaces of the battery cell 20 opposite each other in the third direction can be the two third surfaces 203.

The third thermal management component 40 can correspond one-to-one with each battery cell 20, or a single third thermal management component 40 can be shared by each row of battery cells 20, or by all battery cells 20 along the third direction sharing at least one third thermal management component 40.

By arranging the third thermal management component 40 on at least one side of the battery cell 20, it ensures that the temperature of each battery cell 20 in each row of battery cells 20 can be regulated by the corresponding third thermal management component 40.

According to some embodiments of the present disclosure, the battery 100 includes at least one first battery cell, at least one second battery cell, a first control module, and a second control module. The thermal management component 90 arranged on the first battery cell is independently controlled by the first control module, and the thermal management component 90 arranged on the second battery cell is independently controlled by the second control module.

The first battery cell and the second battery cell can be distinguished by their positions. For example, in an embodiment where the battery 100 includes a box 10, the box 10 can include multiple peripheral walls connected to the bottom wall, with the first battery cell located between the second battery cell and one of the peripheral walls.

The first control module and the second control module can be processing devices like computers, PLCs, or electrical switches. The working principles of controlling the corresponding thermal management components 90 through the first control module and the second control module are well-known to those skilled in the art and will not be elaborated herein.

The first control module and the second control module can be two separate devices or two processing circuits within a device.

This allows for independent temperature regulation of the first battery cell and the second battery cell. Furthermore, different adjustments can be made based on the different environmental temperatures surrounding the first battery cell and the second battery cell, or according to the temperature regulation requirements of each battery cell 20, thereby improving the rationality of the overall thermal management adjustment of the battery 100. In the embodiment of the present disclosure, the battery 100 can also include at least one third battery cell, at least one fourth battery cell, and so on, up to at least one N-th battery cell. Correspondingly, the battery 100 can include a third control module, a fourth control module, and so forth up to an N-th control module.

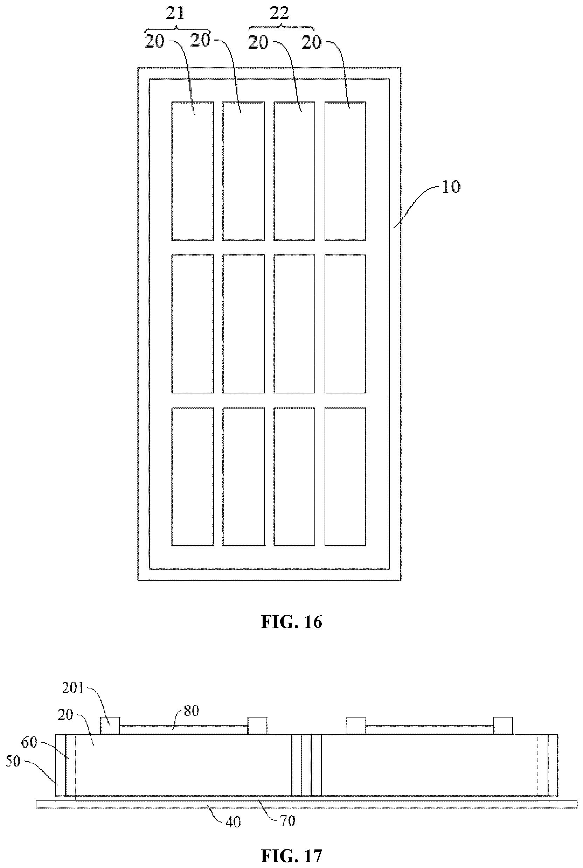

According to some embodiments of the present disclosure, with reference to FIG. 16, FIG. 16 is a structural schematic diagram of a battery according to some embodiments of the present disclosure (showing a first battery pack 21 and a second battery pack 22). The battery 100 includes at least one first battery pack 21, at least one second battery pack 22, a third control module, and a fourth control module. The first battery pack 21 includes at least one battery cell 20, and the second battery pack 22 includes at least one battery cell 20. The thermal management components 90 arranged on the battery cells 20 of the first battery pack 21 are independently controlled by the third control module, and the thermal management components 90 arranged on the battery cells 20 of the second battery pack 22 are independently controlled by the fourth control module.

The first battery pack 21 can include a battery cell 20 or multiple battery cells 20. In this case, the first battery pack 21 can form a module of battery 100 by connecting multiple battery cells 20 in series, in parallel, or in hybrid (which includes both series connection and parallel connection).

The second battery pack 22 can include a battery cell 20 or multiple battery cells 20. In this case, the second battery pack 22 can form a module of battery 100 by connecting multiple battery cells 20 in series, in parallel, or in hybrid (which includes both series connection and parallel connection).

The first battery pack 21 and the second battery pack 22 can be connected in series, in parallel, or in hybrid. The third control module and the fourth control module can be processing devices like computers, PLCs, or electrical switches. The working principles of controlling the corresponding thermal management components 90 through the third control module and the fourth control module are well-known to those skilled in the art and will not be elaborated herein.

The third control module and the fourth control module can be two separate devices or two processing circuits within a device.

The first battery pack 21 and the second battery pack 22 can also be multiple battery cells 100 located at different positions within battery 100. For example, the first battery pack 21 can refer to multiple battery cells 20 near the edge of the box 10 of battery 100; correspondingly, the second battery pack 22 can refer to multiple battery cells 20 located inside the circle formed by the battery cells 20 of the first battery pack 21. Alternatively, in an embodiment where the battery cells 20 are housed within a box 10, the box 10 can be of a rectangular structure, and the first battery pack 21 can refer to the battery cells 20 located in the four corners of the frame of the box 10 of the battery cell 100; correspondingly, the second battery pack 22 can refer to the battery cells 20 in addition to the four corners. For another example, the first battery pack 21 can refer to the layer of the battery cells 20 in a multi-layer stacked battery cell 20 near the top cover or bottom wall; correspondingly, the second battery pack 22 can refer to an intermediate layer of the battery cells 20 in the multilayer structure. In the above examples, since the first battery pack 21 is positioned closer to some components of battery 100 that are more prone to heat transfer, the battery cells 20 in this location tend to lose heat more easily than the battery cells 20 in other positions, which causes localized thermal management imbalances. By arranging the thermal management components 90 configured to independently control the battery packs located in different positions within the battery 100, the thermal management components 90 of the battery pack at the position where the temperature adjustment is needed can be activated independently, and the thermal management components 90 at the battery pack that does not require temperature adjustment can be turned off. This not only conserves thermal management resources but also reduces the thermal impact on battery cells 20 that are already at a stable temperature.

In the embodiment of the present disclosure, the battery 100 can also include a third battery pack, a fourth battery pack, and so on, up to an N-th battery pack. Correspondingly, the battery 100 can also include a fifth control module, a sixth control module, and so on, up to an N-th control module.

According to some embodiments of the present disclosure, with reference to FIG. 2, each row of battery cells 20 includes multiple battery cells 20, and a third thermal management component 40 is arranged to correspond to one row of battery cells 20, with each third thermal management component 40 being configured to regulate the temperature of one row of battery cells 20.

When the third thermal management component 40 is provided in correspondence with the battery cell 20, the number of the third thermal management component 40 can be the same as the number of rows of the battery cells 20.

In the embodiment where each row of the battery cells 20 includes multiple battery cells 20, the total length of the multiple battery cells 20 along the arrangement direction can be less than or equal to the size of the third thermal management component 40 along the arrangement direction, thus ensuring that each battery cell 20 in each row of the battery cells 20 can fully contact the third thermal management component 40. For example, assuming that each row of battery cells 20 is arranged in the second direction, the total length of the multiple battery cells 20 along the second direction can be less than or equal to the size of the third thermal management component 40 along the second direction, thus ensuring that each battery cell 20 in each row of the battery cells 20 can fully contact the third thermal management component 40.

Each third thermal management component 40 is configured to regulate the temperature of a row of battery cells 20, which reduces the number of third thermal management components 40 required by the battery 100. On the one hand, this lowers the manufacturing cost of the battery 100; and on the other hand, in the embodiment where the battery 100 includes a box 10, fewer third thermal management components 40 allow for fewer wires or pipelines occupying the internal space of the box 10. This allows the box 10 to accommodate more battery cells 20, thereby increasing the energy density of the battery 100.

According to some embodiments of the present disclosure, with reference to FIG. 17, FIG. 17 is a schematic diagram of a cooperation between a third thermal management component 40 and a battery cell 20 according to some embodiments of the present disclosure (with a third thermal management component 40 arranged on a side of a battery cell 20 that faces away from an electrode terminal 204 along a third direction). Along the third direction, one side of the battery cell 20 is provided with an electrode terminal 204, and the side of the battery cell 20 opposite to the electrode terminal 204 is provided with the third thermal management component 40.

The electrode terminal 204 is a component of the battery cell 20 for connecting with an external conductor.

In the embodiment where the battery 100 includes a box 10, the side on which the electrode terminal 204 is located can be a side of the battery cell 20 away from the bottom wall.

By arranging the third thermal management component 40 on the side of the battery cell 20 opposite to the electrode terminal 204, the third thermal management component 40 can both regulate the temperature of the battery cell 20 and reduce the risk of a third thermal management component 40 forming an interference with the electrode terminal 204.

In the embodiment, a fourth thermal management component 80 can be arranged on the side of the battery cell 20 where the electrode terminal 204 is located, and the fourth thermal management component 80 can be arranged between the two electrode terminals 204 of the battery cell 20.

According to some embodiments of the present disclosure, the embodiment of the present disclosure further provides an electrical device, comprising the battery 100 provided in the above embodiments.

According to some embodiments of the present disclosure, with reference to FIG. 2, the embodiment of the present disclosure further provides a battery 100, which includes a box 10, multiple battery cells 20, multiple first thermal management components 30, multiple second thermal management components 50, and multiple third thermal management components 40. The multiple batteries 100 are arranged in multiple rows along a first direction, with the battery cell 20 in each row of the battery cells 20 arranged in a second direction. The multiple first thermal management components 30 are arranged along a first direction. A row of battery cells 20 is arranged between two adjacent first thermal management components 30 along the first direction. The first thermal management component 30 is a water-cooling plate. The multiple second thermal management components 50 are arranged along the second direction on both sides of the battery cell 20, and the second thermal management components 50 are electric heating components. The box 10 is provided with an opening, and the box 10 is configured to house the battery cells 20. Along a third direction, the box 10 includes a bottom wall opposite the opening. The third thermal management component 40 is arranged between the battery cell 20 and the bottom wall, with each third thermal management component 40 corresponding to one row of battery cells 20. The third thermal management components 40 are electric heating components.

Finally, it should be noted that the above embodiments are only used to illustrate the technical solution of the present disclosure and are not intended to be a limitation thereof. Notwithstanding the detailed description of the present disclosure with reference to the foregoing embodiments, it should be understood by those of ordinary skill in the art that one may still modify the technical solution described in the preceding embodiments, or replace some or all of the technical features equally. These modifications or substitutions do not depart the essence of the corresponding technical solution from the scope of the technical solution of the embodiments of the present disclosure. All of them shall be covered by the scope of the claims and specification of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A battery, comprising
a battery cell comprising a first surface and a second surface; and
a thermal management component comprising a first thermal management component and a second thermal management component, wherein
the first thermal management component is arranged on the first surface, and the first thermal management component is configured to adjust a temperature of the battery cell; and
the second thermal management component is arranged on the second surface, and the second thermal management component is configured to adjust the temperature of the battery cell.

2. The battery according to claim 1, wherein the first surface and the second surface are two adjacent surfaces of the battery cell.

3. The battery according to claim 1 or 2, wherein the first thermal management component is configured to heat or cool the battery cell; and/or the second thermal management component is configured to heat the battery cell.

4. The battery according to claim 3, wherein the first thermal management component comprises a first accommodating cavity, and the first accommodating cavity is configured to accommodate a heat exchange fluid.

5. The battery according to claim 3, wherein the second thermal management component is an electric heating component.

6. The battery according to any one of claims 1 to 5, wherein the battery further comprises a first buffering component, and at least a portion of the first buffering component is arranged between the battery cell and the second thermal management component.

7. The battery according to claim 6, wherein the first buffering component and the second thermal management component are arranged in a stacked manner.

8. The battery according to claim 6, wherein a first housing cavity is formed inside the first buffering component, and the second thermal management component is housed within the first housing cavity.

9. The battery according to any one of claims 1 to 8, wherein the battery cell comprises two opposing first surfaces, and the two first surfaces are provided with the first thermal management component.

10. The battery according to any one of claims 1 to 8, wherein the battery cell comprises two opposing second surfaces, and the two second surfaces are provided with the second thermal management component.

11. The battery according to any one of claims 1 to 10, wherein the first surface or the second surface is a largest surface of the battery cell.

12. The battery according to any one of claims 1 to 11, wherein the battery further comprises a box with an opening, the box is configured to accommodate the battery cell, the box comprises a bottom wall opposite the opening, and the first thermal management component or the second thermal management component is arranged between the battery cell and the bottom wall.

13. The battery according to any one of claims 1 to 11, wherein the battery cell further comprises a third surface, the thermal management component further comprises a third thermal management component, the third thermal management component is arranged on the third surface, and the third thermal management component is configured to adjust the temperature of the battery cell.

14. The battery according to claim 13, wherein the first surface, the second surface, and the third surface are adjacent to each other in pairs.

15. The battery according to claim 13 or 14, wherein the battery further comprises a box with an opening, the box is configured to accommodate the battery cell, the box comprises a bottom wall opposite the opening, and the third thermal management component is arranged between the battery cell and the bottom wall.

16. The battery according to any one of claims 13 to 15, wherein the third thermal management component is an electric heating component.

17. The battery according to any one of claims 13 to 16, wherein the battery further comprises a second buffering component, and at least a portion of the second buffering component is arranged between the battery cell and the third thermal management component.

18. The battery according to claim 17, wherein the second buffering component and the third thermal management component are arranged in a stacked manner.

19. The battery according to claim 17, wherein a second housing cavity is formed inside the second buffering component, and the third thermal management component is housed within the second housing cavity.

20. The battery according to any one of claims 13 to 19, wherein the battery cell comprises two opposing third surfaces, and the two third surfaces are provided with the third thermal management component.

21. The battery according to any one of claims 13 to 19, wherein the third surface is the largest surface of the battery cell.

22. The battery according to any one of claims 1 to 21, wherein the battery comprises multiple rows of battery cells, the thermal management component comprises multiple first thermal management components, the multiple first thermal management components are arranged along a first direction, and a row of battery cells is arranged between two adjacent first thermal management components along the first direction.

23. The battery according to claim 22, wherein in each row of battery cells, second thermal management components are arranged on both sides of each battery cell along a second direction, one second thermal management component is arranged between two adjacent battery cells, and the first direction is perpendicular to the second direction.

24. The battery according to claim 23, wherein the thermal management component further comprises a third thermal management component, the third thermal management component is arranged along a third direction on at least one side of the battery cell, the third thermal management component is configured to regulate the temperature of the battery cell, and the first direction, the second direction, and the third direction are mutually perpendicular.

25. The battery according to claim 24, wherein the battery comprises at least one first battery cell, at least one second battery cell, a first control module, and a second control module; a thermal management component arranged on the first battery cell is independently controlled by the first control module, and a thermal management component arranged on the second battery cell is independently controlled by the second control module.

26. The battery according to claim 24, wherein the battery comprises at least one first battery pack, at least one second battery pack, a third control module, and a fourth control module, the first battery pack comprises at least one battery cell, the second battery pack comprises at least one battery cell, a thermal management component arranged on the battery cell of the first battery pack is independently controlled by the third control module, and a thermal management component arranged on the battery cell of the second battery pack is independently controlled by the fourth control module.

27. The battery according to any one of claims 24 to 26, wherein each row of the battery cells comprises multiple battery cells, one third thermal management component is arranged to correspond to one row of battery cells, and each third thermal management component is configured to regulate a temperature of one row of battery cells.

28. The battery according to any one of claims 24 to 26, wherein along the third direction, a side of the battery cell is provided with an electrode terminal, and a side of the battery cell opposite to the electrode terminal is provided with the third thermal management component.

29. An electrical device, comprising the battery according to any one of claims 1 to 28.
